# EUROPEAN PATENT SPECIFICATION

(11) **EP 0 900 961 B1**
(45) Date of publication and mention of the grant of the patent: **29.10.2003**
(21) Application number: 98115690.4
(22) Date of filing: 20.08.1998
(51) Int. Cl.: F16K 31/26, F17C 5/02

(54) **Device for limiting the filling of a tank with fuel**
Vorrichtung zur Füllbegrenzung für einen Treibstofftank
Dispositif de limitation de remplissage pour un réservoir de carburant

(30) Priority: 04.09.1997 IT BO970537; 14.10.1997 IT BO970616
(43) Date of publication of application: 10.03.1999
(73) Proprietor: O.M.V.L. S.r.l., 35020 PERNUMIA (Padova) (IT)
(72) Inventor: Regazzi, Renzo, 40060Castel Maggiore (Bologna) (IT)
(74) Representative: Modiano, Guido, Dr.-Ing.

(56) References cited:
- EP-A- 0 071 831
- US-A- 4 444 230

## Description

The present invention relates to a device for automatically limiting the filling of a tank with fuel, particularly with liquefied petroleum gas (LPG).

Currently applicable statutory provisions concerning the containment of liquefied petroleum gas in a vessel in general and in a motor vehicle tank in particular prohibits filling said tank to a volume of more than 80% of the nominal volume of the vessel.

This limitation forces manufacturers of filling devices to provide adapted solutions in order to comply with the above value.

For instance, US Patent 4,444,230 discloses a device for limiting the filling of the tank, provided with valve means for impeding a fluid flow according to a pressure difference between the incoming fluid and the fluid already stored in the tank.

However, conventional devices suffer severe shortcomings which can lead to the complete filling of the tank, causing an explosion hazard in case of volume increase due to heat. These shortcomings are mainly due to the fact that the valve for feeding the LPG into the tank can assume a position which is intermediate between the closed position and the open position and allows LPG to flow into the tank when the supply flow-rate is low due to insufficient pressure difference between the filling pump and the tank or due to manual (i.e., intentional) limiting of the supply flow-rate by acting on the filling nozzle.

The aim of the present invention is to provide a device which allows to obviate the above described drawbacks of conventional devices.

Within the scope of this aim, an object of the present invention is to provide a device which is structurally simple, reliable in operation and flexible in use in relation to the possibility of installing it instead of currently commercially available devices.

This aim, this object and others which will become apparent hereinafter, are achieved with a device for automatically limiting the filling of a tank with fuel, particularly with liquefied petroleum gas, whose characteristics are defined in the claims.

Further characteristics and advantages will become apparent from the following description on the basis of the accompanying drawings, wherein:
Figure 1 is a partially sectional view of a first embodiment of the device according to the present invention;
Figure 2 is a sectional view, taken along the plane II-II of Figure 1;
Figure 3 is a sectional view of another embodiment of the device; and
Figure 4 is a view of the device of Figure 3 in a different operating condition.

With reference to the above figures, 1 designates the body of the device of the present invention, which is applied to a tank for containing fuel, particularly liquefied petroleum gas.

A duct 2 is formed in the body 1 and is provided with a coupling which allows connection to a nozzle for dispensing fuel (for example liquefied petroleum gas) when the tank is to be filled. The coupling has a closure valve 3 which controls the connection between the filling nozzle and the tank.

The body 1 has a shank 4 which protrudes into the tank and in which there is a cylindrical seat 5 which is connected to the duct 2 through a hole defining a circular opening 6 hereinafter termed intake port.

A tubular element 7 is screwed into the seat 5 and extends the cylindrical seat 5. The tubular element 7 has a bottom 8 in which there is a hole 9 which is coaxial to the circular intake port 6. A slot 10 is formed in the peripheral wall of the tubular element 7, proximate to the bottom 8, and is connected to the inside of the tank.

The tubular element 7 has a smaller inside diameter than the seat 5 and therefore its upper edge forms an annular shoulder 11 which surrounds a discharge port 11a.

A stem 12 is guided in the hole 9 and a blind sleeve 13 is rigidly coupled to the top of the stem. The sleeve is arranged coaxially inside the tubular element 7 and forms, together with said tubular element, a tubular interspace 14 which connects the seat 5 to the slot 10 through the discharge port 11a. The sleeve 13 has, at the end that lies furthest from the stem 12, a flange 15 having an outside diameter which is smaller than the outside diameter of the seat 5, so that a circular gap remains between the peripheral edge of the flange and the inside wall of the seat 5. The flange 15 is adapted to abut against the shoulder 11 in order to act as a plug element to interrupt the connection between the seat 5 and the interspace 14.

A stem 16 is slidingly inserted in the sleeve 13, and a square plate 17 is rigidly coupled to the end of the stem that lies outside the sleeve; the corners of said square plate are in sliding contact in the seat 5. A tang 18 protrudes from the plate 17, coaxially to the stem 16, and constitutes a plug element which, together with the plate 17, forms an annular groove in which a sealing ring 19 is accommodated. The tang 18 enters the intake port 6 so as to close it hermetically, except for possible. negligible seepages, or so as to clear it after performing a stroke having a preset extent.

The sealing ring 19 is adapted to abut against a shoulder 20 which is formed by the seat 5 together with the edge of the intake port 6, so as to act as a one-way plug element which prevents the fuel from returning from the seat 5 back into the duct 2.

On the stem 12, between the bottom 8 of the tubular element 7 and the sleeve 13, there is a spring 21 which acts on the sleeve 13 so as to keep the flange 15 spaced from the shoulder 11. An additional spring 22 is arranged inside the sleeve 13 and acts on the stem 16 so as to keep the ring 19 in abutment against the shoulder 20. The spring 21 is weaker than the spring 22 and its elastic constant is such as to ensure the return of the ring 19 into the position for closing the intake port 6 and the lifting of the flange 15 from the shoulder 11 when the pressure in the duct 2 is equal to, or lower than, the pressure in the seat 5.

Vice versa, when the pressure is higher, the plate 17 and the sleeve 13 are actuated so as to compress the springs 21 and 22 and push out the stem 12 through the hole 9 of the bottom 8. The protrusion of the stem 12 depends on the position of an element 23 against which the stem 12 is actuated.

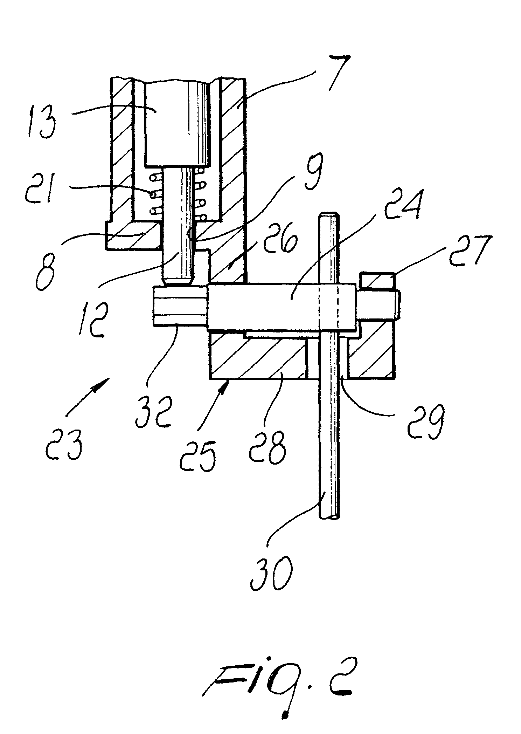

Said element, see also Figure 2, is constituted by a cylinder 24 which is supported rotatably in an angle bracket 25 which cantilevers out from the bottom 8.

The angle bracket is substantially U-shaped, and the seats for rotatably supporting the cylinder 24 are formed in its wings 26 and 27. The wings 26 and 27 are connected by a flat element 28 in which there is a slot 29 which is elongated in the direction of rotation of the cylinder. A rod 30 is guided through the slot 29, and one end of said rod is rigidly inserted in the cylinder 24. A floater 31 for detecting the level of the fuel inside the tank is fixed to the other end of the rod 30, so that fuel level variations produce a rotation of the cylinder 24.

The cylinder 24 comprises a cam, which is constituted by a sector 32 formed by partially milling the cylinder and protrudes axially below the bottom 8 so as to cooperate, by means of its outer surface, with the stem 12. The cam 32 has a preset angular extension which is a function of the volume of the tank that must be left empty.

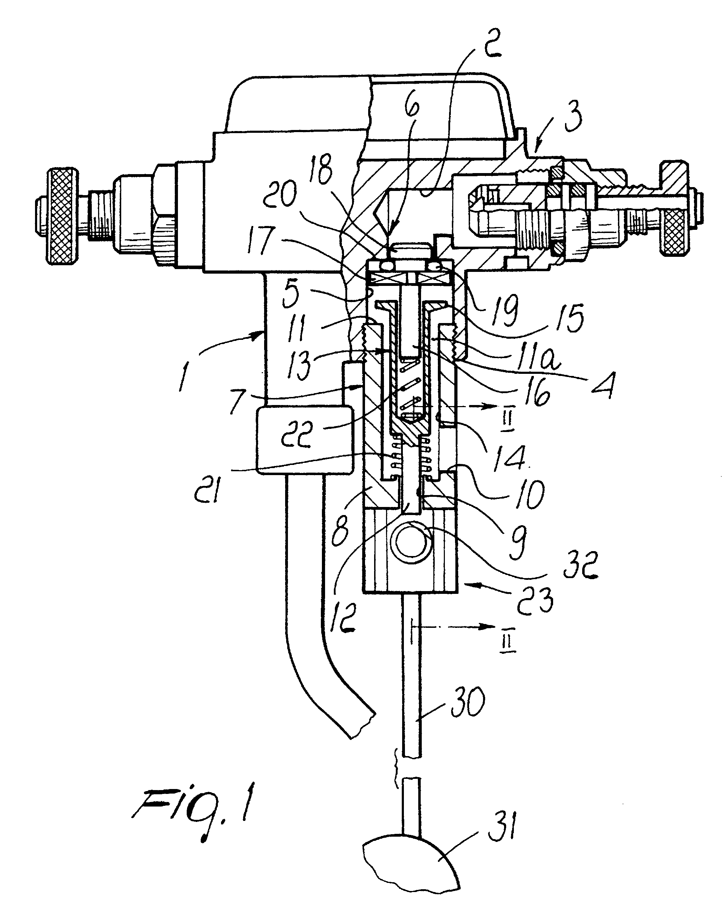

The operation of the described device is as follows. If the tank is empty, the device is in the position shown in Figure 1, in which due to the springs 21 and 22 the tang 18 closes the intake port 6, with the ring 19 in abutment in the shoulder 20, and the floater 31, by means of the rod 30, keeps the cam 32 in the position in which it interferes with the stem 12.

When fuel is to be introduced, for example liquefied petroleum gas (LPG), into the tank, the filling nozzle is connected to the body 1. The pressure of the LPG spaces the ring 19 from the shoulder 20 and makes the tang 18 slide in the intake port 6 in contrast with the return action applied by the spring 22. During this step, the pressure applied by means of the spring 22 to the sleeve 13 is ineffective, since the stem 12 is prevented from protruding from the bottom 8 by abutment against the cam 32.

Accordingly, the flange 15 cannot move down to close the discharge port 11a. When the tang 18 has performed a sliding movement such that it protrudes from the intake port 6, so that a circular opening forms between the tang 18 and the shoulder 20, the LPG can flow into the tank through the opening 6, the seat 5, the interspace 14 and the opening 10.

As the level of the fuel in the tank rises, the floater 31 also rises and, by means of the rod 30, turns the cam 32. When the chosen level has been reached and the cylinder 24 has performed the corresponding rotation, the cam 32 disengages the stem 12, which can accordingly move downwards, making the flange 15 rest against the shoulder 11 and interrupting the flow of LPG into the tank through the discharge port 11a, the interspace 14 and the opening 10.

The described device perfectly achieved the intended aim and object. In particular, it should be noted that the volume of fuel introduced in the tank is defined exactly by the angular position assumed by the cam 32 and cannot be altered by adjusting the filling pressure or by actions of the filling operator.

When the level of the fuel in the tank has reached the chosen value, so that the stem 12 no longer abuts against the cam 32, any further supply of fuel at reduced pressure, due to the greater rigidity of the spring 22 with respect to the spring 21, in fact makes the flange 15 close the discharge outlet 11a before the tang 18 protrudes from the opening 6, thus making it impossible for fuel to flow into the tank.

The device is susceptible of numerous modifications and variations. In particular, the return spring 21 of the sleeve 13, instead of being interposed between the bottom 8 and the bottom of the sleeve 13, can be arranged in the tubular interspace 14 and can act between the bottom 8 and the flange 15.

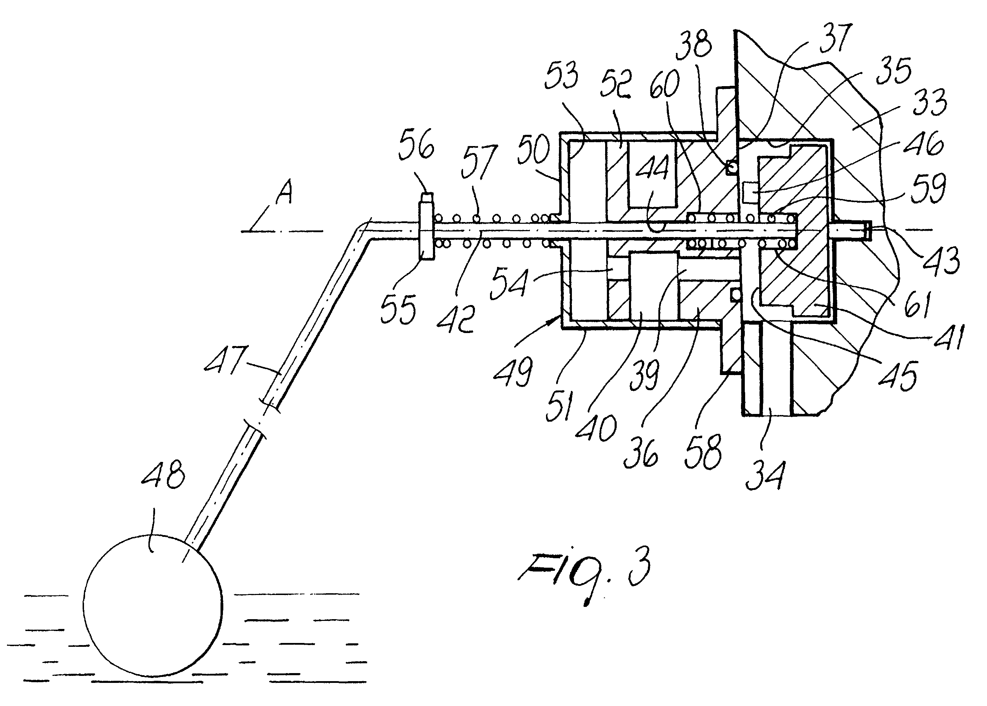

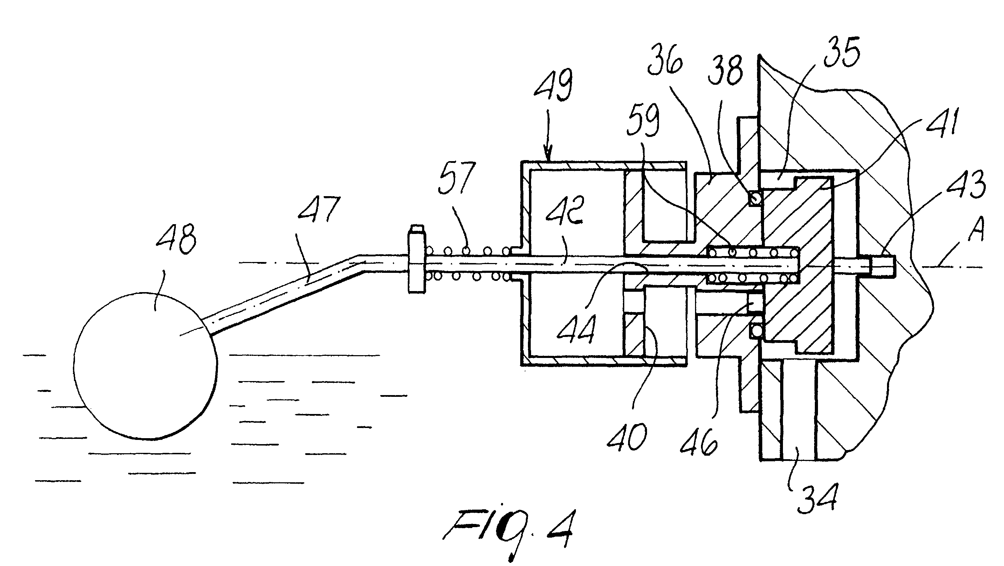

Another embodiment of the device which is technically equivalent to the one shown in Figures 1 and 2 is shown in Figures 3 and 4 in two different operating conditions.

With reference to Figures 3 and 4, the reference numeral 33 designates the body of the device, which is applied to a tank for containing fuel and particularly liquefied petroleum gas.

A duct 34 is formed in the body 33 and leads into a cylindrical seat 35 whose axis is designated by A; said duct is provided with a coupling which allows connection to a nozzle for dispensing fuel (for example liquefied petroleum gas) when the tank is to be filled. The coupling has a closure valve (not shown) which blocks the connection between the filling nozzle and the tank.

A cylindrical portion 36 is associated with the body 33 and is hereinafter term "tang" for convenience in description; said tang closes the seat 35 with one of its faces 37.

An annular groove is formed in the face 37, concentrically to the axis A, and a sealing ring 38, made of rubber-like material, is recessed in said groove and protrudes from the face 37.

An axial hole 39 leads into the area delimited by the ring 38 and constitutes a transfer duct which connects the seat 35 to an annular chamber 40 formed in the tang 36 concentrically to the axis A.

The seat 35 accommodates a cylindrical body 41, which constitutes a first plug element 41 for controlling the flow of fuel through the transfer duct 39.

The plug element 41 is rotationally rigidly coupled to a rod 42, which passes through it and is rotatably supported in a hole 43 of the body 33 and in a hole 44 which passes through the tang 36 along the axis A.

A pin 46 protrudes from the face 45 of the plug element 41 that is directed toward the face 37 of the tang 36; its distance from the axis A is equal to the distance of the transfer duct 39, and its diameter is such that it can engage in said transfer duct when the plug element 41 has assumed a given angular position, with respect to the tang 36, which corresponds to the maximum amount of fuel to be introduced in the tank.

The amount of fuel in the tank is detected by a level transducer, which is composed of the rod 42, of an arm 47 which protrudes radially from the rod 42, and of a floater 48 for detecting the level reached by the fuel inside the tank.

A cup 49 is slidingly superimposed on the tang 36 and comprises a bottom 50, through which the rod 42 passes, and a cylindrical wall 51 which is guided on the tang 36. The cup 49 constitutes a second plug element for controlling the outlet of the transfer duct 39.

The bottom 50 of the cup 49 forms, together with the bottom 52 of the tang 36, a compensation chamber 53 which is constantly connected to the chamber 40 through a hole 54 of the bottom 52.

On the rod 42, outside the bottom 50, there is a ring 55 which is fixed by means of a grub screw 56 and acts as abutment for a spring 57 which acts by compression against the cup 49 so as to actuate it into a position in which it abuts against the flange 58 and produces the external closure of the chamber 40 and therefore of the duct 39.

The described device is completed by a second spring 59, whose elastic constant is lower than that of the spring 57 and which is partly accommodated in a recess 60 of the tang 36 and partly accommodated in a recess 61 of the plug element 41.

The operation of the described device is as follows. If the tank is empty, the device is in the position shown in Figure 3, in which by virtue of the action of the springs 57 and 59 the cup 49 closes the chamber 40 and the plug element 41 is actuated against the face 37. Since the floater 48, by means of the arm 47 and the rod 42, keeps the plug element 41 in an angular position in which the pin 46 abuts against the face 37, the duct 34 is connected to the transfer duct 39 through the seat 35. Fuel, for example liquefied petroleum gas (LPG), is introduced in the tank by connecting the filling nozzle to the body 33. The pressure of the LPG spaces the cup 49 from its abutment against the flange 58, in contrast with the return action applied by the spring 57. When the cup 49 has performed a sliding motion which opens the chamber 40 onto the outside, the LPG that arrives from the duct 34 can flow into the tank through the seat 35, the transfer duct 39 and the chamber 40.

As the level of the fuel in the tank rises, the floater 48 also rises and, by means of the rod 47, 42, turns the plug element 41. When the chosen level has been reached and the plug element 41 has performed the corresponding rotation, the pin 46, by virtue of the return action of the spring 57, engages the duct 39, making the plug element rest against the sealing ring 38 and closing the duct 39, thus interrupting the flow of LPG into the tank through the duct 39 and the chamber 40.

In particular, it should be noted that the volume of fuel introduced in the tank is defined exactly by the angular position assumed by the plug element 41 and cannot be altered by adjusting the filling pressure or by actions of the filling operator.

When the level of the fuel in the tank has reached the chosen value, so that the pin 46 has engaged the duct 39, any further supply of fuel at reduced pressure has no effect on the closed position of the plug element, since said plug element is affected not only the traction of the spring 57, which is stronger than the spring 59, but also by the pressure of the supplied fuel.

In the device of Figures 3 and 4, the pin 46, instead of engaging the transfer duct 39, can also engage a dead hole formed in the face 37.

The disclosures in Italian Patent Applications No. BO97A000537 and No. BO97A000616 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A device for automatically limiting the filling of a tank with fuel, particularly with liquefied petroleum gas, comprising:
a body (1; 33), provided with a duct (2;34) which can be connected to a fuel supply;
a seat (5; 35), which can be connected to said duct (2; 34); a first plug element (18; 41), which is slidingly accommodated in said seat (5; 35) and is adapted to control the flow of fuel through said duct (2; 34);
a second plug element (15; 49), which can move with respect to said first plug element and is adapted to control the flow of fuel into said tank;
**characterised in that**
the device further comprises a tubular or cylindrical element (7; 36) which extends said cylindrical seat (5; 35), and
an opening (10; 40), formed in the peripheral wall of said tubular or cylindrical element (7; 36) for the passage of fluid from the seat (5; 35) to the tank,
said plug elements (15, 18; 41, 49) being operatively associated by spring means (21, 22; 57, 59) which are adapted to keep one of said plug elements in the position for blocking the flow of fuel when said duct (2) is not connected to the fuel supply; cam means (32; 46) being also provided which are operatively associated with one of said plug elements (15, 18; 41, 49) and are controlled by a detector (31; 48) for detecting the level of the fuel inside the tank, so that during filling and until the preset level is reached, said cam means keep said plug elements in the position for the flow of fuel into the tank, while when the preset level is reached, said plug elements are actuated into the position for blocking a discharge port provided between said seat (5; 35) and said opening.

2. A device according to claim 1, **characterized in that** said seat (5) is provided with an intake port (6) which is connected to said duct (2); **in that** said second plug element (15) is accommodated in said seat (5), can slide coaxially to said first plug element (18) and is adapted to control said discharge port (11a); said spring means comprising a first spring (22), which acts between said plug elements (18, 15), and a second spring (21), which acts between said second plug element (15) and an abutment of said seat, said springs (22, 21) being adapted to keep said first plug element (18) in the position for closing said intake port (6) when said duct (2) is not connected to the fuel supply.

3. A device according to claim 2, **characterized in that** said first plug element (18) is constituted by a plate (17) which is guided in said seat (5), an axial tang (18) protruding from a face of said plate and being adapted to hermetically engage said intake port (6) along a certain extent, a stem (16) protruding from the opposite face, said stem (16) being coaxial to said tang (18) and being able to slide in a blind sleeve (13) which is guided in said tubular element (7) which is associated with said body (1) coaxially to said seat (5), a sealing ring (19) being arranged around said tang (18) on said plate (17) in order to close said intake port (6), said tubular element (7) comprising an annular shoulder (11) which surrounds said discharge port (11a), said sleeve (13) having, at one end, a flange (15) which is adapted to abut against said shoulder (11) in order to close said discharge port (11a) and having, at the opposite end, a stem (12) which can slide in said tubular element (7) and cooperates with said cam (32); a tubular interspace (14) being provided, between said sleeve (13) and said tubular element (7), for the discharge of fuel into the tank through slots (10) of said tubular element (7); a first spring (22) being accommodated in said sleeve (13) and acting between said sleeve and the stem (16) of said plate (17) and a second spring (21) which acts between said sleeve (13) and said tubular element (7); said second spring (21) having a lower elastic constant than said first spring (22).

4. A device according to claim 3, **characterized in that** said second spring (21) is accommodated in said interspace (14) and acts between said flange (15) and said tubular element (7).

5. A device according to claim 4, **characterized in that** said cam (32) is constituted by a sector of a cylinder (24) which is supported in said tubular element (7) so that it can rotate about an axis which is perpendicular to the axis of the stem (12) of said sleeve (13), a rod (30) being radially rigidly coupled to said cylinder (24), a detector (31) being fixed to said rod to detect the level of the fuel inside the tank; said cam (32) being able to rotate between a first angular position, in which the stem (12) of said sleeve (13) abuts against it to prevent said flange (15) from abutting against said shoulder (11) and closing said discharge port (11a), and a second angular position, in which said stem (12) does not abut against said sector, allowing said stem (12) to perform a movement which allows the flange (15) to close said discharge port (11a).

6. A device according to claim 1, **characterized in that** it further comprises a fuel transfer duct (39), which is formed in said cylindrical portion (36) to connect said seat (35) to the inside of said tank; said plug elements comprising a first plug element which is slidingly and rotatably accommodated in said seat (35); a control element in a given angular position of said first plug element (41) allowing said first plug element to move into a position for closing the inlet of said transfer duct (39); and a second plug element (49), which is slidingly supported on said cylindrical portion (36) coaxially to said first plug element (41) and is adapted to control the outlet of said transfer duct (39); said detector (48) for transducing the level of the fuel inside the tank being operatively associated with said first plug element (41) so as to actuate the rotation thereof until said preset angular position is reached; a first spring (59), which acts between said first plug element (41) and said cylindrical portion (36), and a second spring (57), which acts on said second plug element (49), said springs (57, 59) being adapted to keep said second plug element (49) in the position for closing said transfer duct (39) and said first plug element (41) in the position for connecting said transfer duct (39) to said seat (35) when said seat (35) is not connected to the fuel supply; said first plug element (41) being controlled by said detector (48) so that during filling and until the preset level is reached, the pressure of the fuel retains said first plug element (41) in the position for the flow of the fuel through said transfer duct (39), while when the preset level is reached, said detector (48) places said first plug element (41) in the position for blocking said transfer duct (39).

7. A device according to claim 6, **characterized in that** said fuel level detector (48) is composed of a rod (42) which is rotatably and slidingly supported in said cylindrical portion (36) and has an end which protrudes into said seat (35) and is rotationally rigidly coupled to said first plug element (41) and an opposite end which is provided with a radial arm (47).

8. A device according to claim 7, **characterized in that** said first plug element (41) is provided with a pin (46) for abutment against a wall (37) of said seat (35), which is adapted to engage a recess of said wall (37) in order to allow the sliding of said first plug element (41) into a position for closing the inlet of said transfer duct (39).

9. A device according to claim 8, **characterized in that** an annular groove is formed in said wall (37), concentrically to the rod (42) of the detector (48), a sealing ring (38) being recessed in said groove, said ring delimiting an area in which the inlet of said transfer duct (39) is located, said first plug element (41) having a face which is adapted to abut against said ring in order to close said inlet.

10. A device according to claim 8, **characterized in that** said recess in which said pin (46) engages is the transfer duct (39).

## Patentansprüche

1. Vorrichtung zur automatischen Begrenzung des Füllens eines Tanks mit Brennstoff, insbesondere mit Treibgas, die Folgendes umfasst:
einen Körper (1; 33), der mit einem Kanal (2; 34) versehen ist, der mit einer Brennstoffversorgung verbunden werden kann;
einen mit dem Kanal (2; 34) verbindbaren Sitz (5; 35); ein in dem Sitz (5; 35) verschiebbar untergebrachtes erstes Stöpselelement (18; 41), das zur Steuerung des Brennstoffstroms durch den Kanal (2; 34) ausgeführt ist;
ein zweites Stöpselelement (15; 49), das sich bezüglich des ersten Stöpselelements bewegen kann und zur Steuerung des Brennstoffstroms in den Tank ausgeführt ist;
**dadurch gekennzeichnet, dass**
die Vorrichtung weiterhin ein röhrenförmiges oder zylindrisches Element (7; 36), das den zylindrischen Sitz (5; 35) verlängert, und
eine in der Umfangswand des röhrenförmigen oder zylindrischen Elements (7; 36) ausgebildete Öffnung (10; 40) für das Passieren von Fluid von dem Sitz (5; 35) zum Tank umfasst,
wobei die Stöpselelemente (15, 18; 41, 49) durch Federmittel (21, 22; 57, 59) wirkzugeordnet sind, die so ausgeführt sind, dass sie eines der Stöpselelemente in der Position zum Sperren des Brennstoffstroms halten, wenn der Kanal (2) nicht mit der Brennstoffversorgung verbunden ist; wobei des Weiteren Kurvenmittel (32; 46) vorgesehen sind, die einem der Stöpselelemente (15, 18; 41, 49) wirkzugeordnet sind und durch einen Detektor (31; 48) zur Erfassung des Brennstoffpegels im Tank gesteuert werden, so dass die Kurvenmittel beim Füllen und bis zum Erreichen des voreingestellten Pegels die Stöpselelemente in der Position für den Brennstoffstrom in den Tank halten, während die Stöpselelemente bei Erreichen des voreingestellten Pegels in die Position zum Sperren einer zwischen dem Sitz (5; 35) und der Öffnung vorgesehenen Austragsöffnung gebracht werden.

2. Vorrichtung nach Anspruch 1, **dadurch gekennzeichnet, dass** der Sitz (5) mit einer mit dem Kanal (2) verbundenen Einlassöffnung (6) versehen ist; dass das zweite Stöpselelement (15) in dem Sitz (5) untergebracht ist, koaxial zum ersten Stöpselelement (18) gleiten kann und zur Steuerung der Austragsöffnung (11a) ausgeführt ist; wobei die Federmittel eine erste Feder (22), die zwischen den Stöpselelementen (18, 15) wirkt, und eine zweite Feder (21), die zwischen dem zweiten Stöpselelement (15) und einer Stoßstelle des Sitzes wirkt, umfassen, wobei die Federn (22, 21) so ausgeführt sind, dass sie das erste Stöpselelement (18) in der Position zum Schließen der Einlassöffnung (6) halten, wenn der Kanal (2) nicht mit der Brennstoffversorgung verbunden ist.

3. Vorrichtung nach Anspruch 2, **dadurch gekennzeichnet, dass** das erste Stöpselelement (18) durch eine in dem Sitz (5) geführte Platte (17) gebildet wird, wobei ein axialer Lappen (18) von einer Fläche der Platte ragt und so ausgeführt ist, dass er die Einlassöffnung (6) entlang einer gewissen Erstreckung hermetisch in Eingriff nimmt, wobei von der gegenüberliegenden Fläche ein Schaft (16) ragt, der sich koaxial zum Lappen (18) erstreckt und in der Lage ist, in einer Sackhülse (13) zu gleiten, die in dem dem Körper (1) koaxial zum Sitz (5) zugeordneten röhrenförmigen Element (7) geführt wird, wobei ein Dichtungsring (19) um den Lappen (18) an der Platte (17) herum zum Schließen der Einlassöffnung (6) angeordnet ist, wobei das röhrenförmige Element (7) eine die Austragsöffnung (11a) umgebende ringförmige Schulter (11) umfasst, wobei die Hülse (13) an einem Ende einen Flansch (15), der zum Anstoßen an die Schulter (11) zum Schließen der Austragsöffnung (11a) ausgeführt ist, und am gegenüberliegenden Ende einen Schaft (12), der in dem röhrenförmigen Element (7) gleiten kann und mit der Kurve (32) zusammenwirkt, aufweist; wobei zwischen der Hülse (13) und dem röhrenförmigen Element (7) ein röhrenförmiger Zwischenraum (14) zur Abführung des Brennstoffs in den Tank durch Schlitze (10) des röhrenförmigen Elements (7) vorgesehen ist; wobei eine erste Feder (22) in der Hülse (13) untergebracht ist und zwischen der Hülse und dem Schaft (16) der Platte (17) wirkt und eine zweite Feder (21) zwischen der Hülse (13) und dem röhrenförmigen Element (7) wirkt; wobei die zweite Feder (21) eine kleinere Federkonstante aufweist als die erste Feder (22).

4. Vorrichtung nach Anspruch 3, **dadurch gekennzeichnet, dass** die zweite Feder (21) in dem Zwischenraum (14) untergebracht ist und zwischen dem Flansch (15) und dem röhrenförmigen Element (7) wirkt.

5. Vorrichtung nach Anspruch 4, **dadurch gekennzeichnet, dass** die Kurve (32) durch einen Sektor eines Zylinders (24) gebildet wird, der in dem röhrenförmigen Element (7) so gestützt wird, dass er sich um eine Achse drehen kann, die senkrecht zur Achse des Schafts (12) der Hülse (13) verläuft, wobei eine Stange (30) radial mit dem Zylinder (24) starr verbunden ist, wobei ein Detektor (31) an der Stange zur Erfassung des Brennstoffpegels im Tank befestigt ist; wobei sich die Kurve zwischen einer ersten Winkelstellung, in der der Schaft (12) der Hülse (13) daran anstößt, um zu verhindern, dass der Flansch (15) an die Schulter (11) anstößt und die Austragsöffnung (11a) schließt, und einer zweiten Winkelstellung, in der der Schaft (12) nicht am Sektor anstößt, wodurch der Schaft (12) eine Bewegung ausführen kann, die es dem Flansch (15) gestattet, die Austragsöffnung (11a) zu schließen, drehen kann.

6. Vorrichtung nach Anspruch 1, **dadurch gekennzeichnet, dass** sie weiterhin Folgendes umfasst: einen Brennstofftransferkanal (39), der in dem zylindrischen Teil (36) zur Verbindung des Sitzes (35) mit dem Inneren des Tanks ausgebildet ist; wobei die Stöpselelemente ein erstes Stöpselelement, das verschiebbar und drehbar im Sitz (35) untergebracht ist, wobei es ein Steuerelement dem ersten Stöpselelement in einer gegebenen Winkelstellung des ersten Stöpselelements (41) gestattet, sich in eine Position zum Schließen des Einlasses des Transferkanals (39) zu bewegen, und ein zweites Stöpselelement (49), das an dem zylindrischen Teil (36) koaxial zum ersten Stöpselelement (41) verschiebbar gestützt wird und zur Steuerung des Auslasses des Transferkanals (39) ausgeführt ist, umfassen; wobei der Detektor (48) zum Umwandeln des Brennstoffpegels im Tank dem ersten Stöpselelement (41) wirkzugeordnet ist, so dass er dessen Drehung bewirkt, bis die voreingestellte Winkelstellung erreicht ist; eine erste Feder (59), die zwischen dem ersten Stöpselelement (41) und dem zylindrischen Teil (36) wirkt, und eine zweite Feder (57), die auf das zweite Stöpselelement (49) einwirkt, wobei die Federn (57, 59) so ausgeführt sind, dass sie das zweite Stöpselelement (49) in der Position zum Schließen des Transferkanals (39) und das erste Stöpselelement (41) in der Position zur Verbindung des Transferkanals (39) mit dem Sitz (35) halten, wenn der Sitz (35) nicht mit der Brennstoffversorgung verbunden ist; wobei das erste Stöpselelement (41) durch den Detektor (48) so gesteuert wird, dass der Druck des Brennstoffs beim Füllen und bis zum Erreichen des voreingestellten Pegels das erste Stöpselelement (41) in der Position für den Brennstoffstrom durch den Transferkanal (39) hält, während der Detektor (48) bei Erreichen des voreingestellten Pegels das erste Stöpselelement (41) in der Position zum Sperren des Transferkanals (39) anordnet.

7. Vorrichtung nach Anspruch 6, **dadurch gekennzeichnet, dass** der Brennstoffpegeldetektor (48) aus einer Stange (42) besteht, die in dem zylindrischen Teil (36) drehbar und verschiebbar gestützt wird und ein Ende, das in den Sitz (35) ragt und mit dem ersten Stöpselelement (41) drehbar starr verbunden ist, und ein gegenüberliegendes Ende, das mit einem radialen Arm (47) versehen ist, aufweist.

8. Vorrichtung nach Anspruch 7, **dadurch gekennzeichnet, dass** das erste Stöpselelement (41) mit einem Stift (46) zum Anstoßen an eine Wand (37) des Sitzes (35) versehen ist, der zum Eingreifen in eine Aussparung der Wand (37) ausgeführt ist, um das Gleiten des ersten. Stöpselelements (41) in eine Position zum Schließen des Einlasses des Transferkanals (39) zu gestatten.

9. Vorrichtung nach Anspruch 8, **dadurch gekennzeichnet, dass** in der Wand (37) eine ringförmige Nut konzentrisch zur Stange (42) des Detektors (48) ausgebildet ist, wobei ein Dichtungsring (38) in der Nut ausgespart ist, der einen Bereich begrenzt, in dem sich der Einlass des Transferkanals (39) befindet, wobei das erste Stöpselelement (41) eine Fläche aufweist, die dazu ausgeführt ist, an den Ring anzustoßen, um den Einlass zu schließen.

10. Vorrichtung nach Anspruch 8, **dadurch gekennzeichnet, dass** die Aussparung, in den der Stift (46) eingreift, der Transferkanal (39) ist.

## Revendications

1. Dispositif pour limiter de façon automatique le remplissage d'un réservoir avec du carburant, particulièrement avec du gaz de pétrole liquéfié, comprenant :
- un corps (1 ; 33), comprenant un canal (2 ; 34) qui peut être relié à un dispositif d'approvisionnement en carburant ;
- un siège (5 ; 35) qui peut être relié audit canal (2 ; 34) ; un premier élément de connexion (18 ; 41), qui est adapté en coulissement dans ledit siège (5 ; 35) et est conçu pour commander le flux de carburant à travers ledit canal (2 ; 34).
- un second élément de connexion (15 ; 49), qui peut se déplacer par rapport audit premier élément de connexion et qui est adapté pour commander le flux de carburant pénétrant dans ledit réservoir ;
**caractérisé en ce que**
le dispositif comprend en outre un élément tubulaire ou cylindrique (7 ; 36) qui prolonge ledit siège cylindrique (5 ; 35), et
une ouverture (10 ; 40), formée dans la paroi périphérique dudit élément tubulaire ou cylindrique (7 ; 36) pour le passage du fluide depuis le siège (5 ; 35) vers le réservoir,
lesdits éléments de connexion (15,18 ; 41,49) étant opérationnellement liés par des moyens de ressorts (21,22 ; 57,59) qui sont adaptés pour garder l'un desdits éléments de connexion en position pour bloquer le flux de carburant quand ledit canal (2) n'est pas connecté au dispositif d'approvisionnement en carburant ; des moyens de cames (32; 46) étant également prévus qui sont opérationnellement liés avec l'un desdits éléments de connexion (15,18; 41,49) et qui sont commandés par un capteur (31 ; 48) pour détecter le niveau de carburant à l'intérieur du réservoir, de sorte que pendant le remplissage et jusqu'à ce que le niveau prédéfini soit atteint, lesdits moyens de cames laissent lesdits éléments de connexion dans la position autorisant la pénétration du flux de carburant dans le réservoir, alors que quand le niveau prédéfini est atteint, lesdits éléments de connexion sont activés dans la position qui bloque un orifice de passage prévu entre ledit siège (5 ; 35) et ladite ouverture.

2. Dispositif selon la revendication 1, **caractérisé en ce que** ledit siège (5) est pourvu d'un orifice d'admission (6) qui est connecté audit canal (2) ; **en ce que** ledit second élément de connexion (15) est logé dans ledit siège (5), peut coulisser coaxialement par rapport audit premier élément de connexion (18) et est adapté pour commander ledit orifice de passage (11a); lesdits moyens de ressorts comprenant un premier ressort (22), qui agit entre lesdits éléments de connexion (18; 15), et un second ressort (21), qui agit entre ledit second élément de connexion (15) et une butée dudit siège, lesdits ressorts (22, 21) étant adaptés pour laisser ledit premier élément de connexion (18) dans la position qui ferme ledit orifice d'admission (6) quand ledit canal (2) n'est pas connecté au dispositif d'approvisionnement en carburant.

3. Dispositif selon la revendication 2, **caractérisé en ce que** ledit premier élément de connexion (18) est constitué d'un plateau (17) qui est guidé dans ledit siège (5), un tenon axial (18) dépassant d'une face dudit plateau et étant adapté pour pénétrer hermétiquement dans ledit orifice d'admission (6) selon une certaine amplitude, une tige de manoeuvre (16) dépassant de la face opposée, ladite tige de manoeuvre (16) étant coaxiale avec ledit tenon (18) et pouvant coulisser dans une enveloppe borgne (13) qui est guidée dans ledit élément tubulaire (7) qui est lié audit corps (1) coaxialement audit siège (5), un joint annulaire d'étanchéité (19) étant adapté autour dudit tenon (18) sur ledit plateau (17) afin de fermer ledit orifice d'admission (6), ledit élément tubulaire (7) comprenant un épaulement annulaire (11) qui entoure ledit orifice de passage (11a), ladite enveloppe (13) ayant, à une extrémité, un flasque (15) qui est adapté pour buter contre ledit épaulement (11) afin d'obturer ledit orifice de passage (11a) et ayant, à l'extrémité opposée, une tige de manoeuvre (12) qui peut coulisser dans ledit élément tubulaire (7) et qui coopère avec ladite came (32) ; un espace intermédiaire tubulaire (14) étant prévu, entre ladite enveloppe (13) et ledit élément tubulaire (7), pour la pénétration de carburant à l'intérieur du réservoir à travers des fentes (10) dudit élément tubulaire (7) ; un premier ressort (22) étant logé dans ladite enveloppe (13) et agissant entre ladite enveloppe et la tige de manoeuvre (16) dudit plateau (17) et un second ressort (21) qui agit entre ladite enveloppe (13) et ledit élément tubulaire (7) ; ledit second ressort (21) ayant une constante élastique inférieure à celle dudit premier ressort (22).

4. Dispositif selon la revendication 3, **caractérisé en ce que** ledit second ressort (21) est fixé dans ledit espace intermédiaire (14) et agit entre ledit flasque (15) et ledit élément tubulaire (7).

5. Dispositif selon la revendication 4, **caractérisé en ce que** ladite came (32) est constituée par un secteur d'un cylindre (24) qui est porté dans ledit élément tubulaire (7) afin qu'il puisse pivoter autour d'un axe qui est perpendiculaire à l'axe de la tige de manoeuvre (12) de ladite enveloppe (13), une tige (30) étant couplée radialement rigidement audit cylindre (24), un capteur (31) étant fixé à ladite tige pour détecter le niveau de carburant à l'intérieur du réservoir ; ladite came (32) pouvant effectuer une rotation entre une première position angulaire, dans laquelle la tige de manoeuvre (12) de ladite enveloppe (13) entre en butée contre elle pour empêcher ledit flasque (15) de buter contre ledit épaulement (11) et d'obturer ledit orifice de passage (11a), et une seconde position angulaire, dans laquelle ladite tige de manoeuvre (12) n'entre pas en butée contre ledit secteur, permettant à ladite tige de manoeuvre (12) d'effectuer un mouvement qui permet au flasque (15) d'obturer ledit orifice de passage (11a).

6. Dispositif selon la revendication 1, **caractérisé en ce qu'**il comprend en outre un canal de transfert de carburant (39), qui est formé dans ladite portion cylindrique (36) pour connecter ledit siège (35) à l'espace intérieur dudit réservoir ; lesdits éléments de connexion comprenant un premier élément de connexion qui est logé à rotation et à coulissement dans ledit siège (35) ; un élément de commande dans une position angulaire donnée dudit premier élément de connexion (41) permettant audit premier élément de connexion de se déplacer jusqu'à une position pour obturer l'entrée dudit canal de transfert de carburant (39) ; et un second élément de connexion (49), qui est supporté à coulissement sur ladite portion cylindrique (36) coaxialement audit premier élément de connexion (41) et est adapté pour commander la sortie dudit canal de transfert (39) ; ledit capteur (48) pour détecter le niveau de carburant à l'intérieur du réservoir étant opérationnellement associé audit premier élément de connexion (41) afin d'activer sa rotation jusqu'à ce que ladite position angulaire prédéfinie soit atteinte ; un premier ressort (59), qui agit entre ledit premier élément de connexion (41) et ladite portion cylindrique (36), et un second ressort (57), qui agit sur ledit second élément de connexion (49), lesdits ressorts (57, 59) étant adaptés pour maintenir ledit second élément de connexion (49) dans la position qui ferme ledit canal de transfert (39) et ledit premier élément de connexion (41) dans la position qui connecte ledit canal de transfert (39) audit siège (35) quand ledit siège (35) n'est pas connecté au dispositif d'approvisionnement en carburant ; ledit premier élément de connexion (41) étant commandé par ledit capteur (48) de sorte que pendant le remplissage et jusqu'à ce que le niveau prédéfini soit atteint, la pression du carburant retient ledit premier élément de connexion (41) dans la position autorisant le flux du carburant à travers ledit canal de transfert (39), tandis que lorsque le niveau prédéfini est atteint, ledit capteur (48) place ledit premier élément de connexion (41) dans la position qui bloque ledit canal de transfert (39).

7. Dispositif selon la revendication 6, **caractérisé en ce que** ledit capteur de niveau de carburant (48) est composé d'une tige (42) qui est portée en rotation et en coulissement dans ladite portion cylindrique (36) et a une extrémité qui dépasse et pénètre dans ledit siège (35) et est rigidement couplée en rotation audit premier élément de connexion (41) et une extrémité opposée qui est munie d'un bras radial (47).

8. Dispositif selon la revendication 7, **caractérisé en ce que** ledit premier élément de connexion (41) est muni d'un axe (46) pour buter contre une paroi (37) dudit siège (35), qui est adapté pour pénétrer dans un évidement de ladite paroi (37) afin de permettre le coulissement dudit premier élément de connexion (41) jusqu'à une position qui obture l'entrée dudit canal de transfert (39).

9. Dispositif selon la revendication 8, **caractérisé en ce qu'**une gorge annulaire est formée dans ladite paroi (37), concentriquement avec la tige (42) du capteur (48), un joint annulaire (38) étant engagé dans ladite gorge, ledit joint annulaire délimitant une région dans laquelle l'entrée dudit canal de transfert (39) est logée, ledit premier élément de connexion (41) ayant une face qui est adaptée pour buter contre ledit joint annulaire afin de fermer ladite entrée.

10. Dispositif selon la revendication 8, **caractérisé en ce que** ledit évidement dans lequel ledit axe (46) pénètre est le canal de transfert (39).
